# FASCICULE DE BREVET EUROPEEN

(11) **EP 0 826 960 B1**
(45) Date de publication et mention de la délivrance du brevet: **11.08.2004**
(21) Numéro de dépôt: 97402011.7
(22) Date de dépôt: 28.08.1997
(51) Int. Cl.: G01N 23/04

(54) **Procédé de détection automatique de défauts dans des pièces mécaniques à géométrie complexe**
Verfahren zur automatischen Erfassung von Fehlstellen in mechanischen Werkstücken mit komplizierter Geometrie
Method for the automatic detection of defects in mechanical workpieces with complex geometry

(30) Priorité: 29.08.1996 FR 9610552
(43) Date de publication de la demande: 04.03.1998
(73) Titulaire: SOCIETE NATIONALE D'ETUDE ET DE CONSTRUCTION DE MOTEURS D'AVIATION, "S.N.E.C.M.A.", 75015 Paris (FR)
(72) Inventeur: Tilman, Jochems, 66000 Perpignan (FR); Lefèvre, Préjean, Véronique Hélène, Marie Hélène, 92330 Sceaux (FR)

(56) Documents cités:
- EP-A- 0 375 157
- EP-A- 0 576 961
- EP-A- 0 599 335

## Description

L'invention concerne un procédé de détection automatique de défauts dans des pièces mécaniques à géométrie complexe inspectées à partir d'images radioscopiques. Elle s'applique en particulier, dans le domaine de l'aéronautique, à l'expertise automatique des aubes de fonderie contrôlées par radioscopie. Le contrôle non destructif par radioscopie est limité jusqu'à maintenant à des radioscopies de pièces présentant une géométrie simple. Pour ce type de pièces, les radioscopies comportent des zones expertisables d'apparence homogène dans lesquelles la variation des niveaux de gris sont de type basse fréquence et dans lesquelles les défauts éventuels sont recherchés. Ces défauts sont recherchés après utilisation des opérations de traitement d'image telles que des transformations morphologiques et des filtrages linéaires.
Ces opérations de traitement d'image sont définies à partir d'éléments structurants standards de taille et de forme prédéterminée et supposent que les zones expertisables de l'image sont des ensembles infinis, tous les points de l'image ayant le même nombre de points voisins (cette condition n'est en réalité par vérifiée aux limites des zones expertisables).

Dans le cas des pièces à géométrie complexe pour lesquelles l'image radioscopique présente une texture comportant des zones faiblement contrastées exemptes d'information utile constituant des zones non expertisables, ces zones non expertisables se superposant aux zones expertisables de l'image, l'application des opérations classiques de traitement d'image donne des résultats erronés dus à l'effet de ces zones exemptes d'information utile. Les zones faiblement contrastées ou saturées constituent en effet des discontinuités dans les zones expertisables qui ne peuvent plus être considérées comme des ensembles infinis.

Le but de l'invention est de déterminer un procédé de détection automatique de défauts qui s'applique à des pièces à géométrie complexe dont les radioscopies comportent des zones expertisables présentant un gradient de niveaux de gris et dans lesquelles se superposent des zones saturées dans des niveaux de gris très clairs ou très sombres ne comportant pas d'information utile.

Pour cela,l'invention consiste à appliquer aux radioscopies de pièces complexes, des nouvelles opérations de traitement d'image dont le résultat dépend uniquement des points de l'image situés dans des zones expertisables de la radioscopie. Ces nouvelles opérations consistent à segmenter l'image radioscopique en deux classes de zones de manière à obtenir une image binaire, appelée masque, dans laquelle les zones expertisables et les zones non expertisables prennent respectivement les valeurs 1 et 0, puis à appliquer à l'image radioscopique des transformations morphologiques conditionnelles élaborées à partir d'un élément structurant conditionnel. L'élément structurant conditionnel est obtenu par intersection entre un élément structurant classique et le masque.

Selon l'invention, le procédé de détection automatique de défauts dans des pièces mécaniques à géométrie complexe à partir d'images radioscopiques présentant des zones exemptes d'information utile à l'intérieur de zones dites expertisables, est caractérisé en ce qu'il consiste :
- à réaliser au moins une image radioscopique de la pièce à contrôler,
- à segmenter l'image radioscopique en deux classes de zones correspondant respectivement aux zones expertisables et non expertisables, de manière à obtenir une image binaire appelée masque,
- à choisir un élément structurant standard de taille et de forme prédéterminées,
- à définir un élément structurant conditionnel égal à l'intersection de l'élément structurant standard avec le masque,
- à définir des transformations morphologiques conditionnelles utilisant l'élément structurant conditionnel,
- à appliquer lesdites transformations morphologiques conditionnelles à l'image radioscopique de façon à mettre en évidence des éventuels défauts dans les zones expertisables de l'image.

D'autres particularités et avantages de l'invention apparaîtront clairement dans la suite de la description donnée à titre d'exemple non limitatif, et faite en regard des figures annexées qui représentent :
- la figure 1, un exemple de radioscopie d'une aube de fonderie creuse ;
- la figure 2, un schéma synoptique des principales étapes du procédé de détection de défauts dans une radioscopie de pièce mécanique complexe, selon l'invention ;

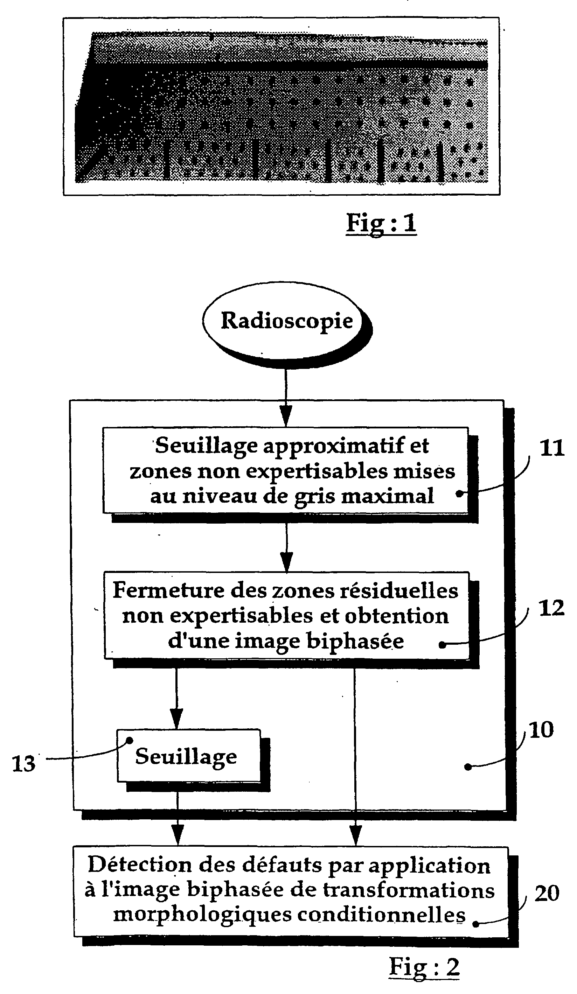

La figure 1 représente un exemple de radioscopie d'une aube creuse. L'aube creuse comporte des structures internes, tels que des perturbateurs et des parois, qui se superposent à la zone expertisable à contrôler et donnent dans l'image des régions faiblement contrastées et exemptes d'information utile. Ces régions apparaissent en noir sur l'image radioscopique de l'aube creuse représentée sur la figure 1 et constituent des zones non expertisables.

Par ailleurs l'aube creuse n'ayant pas une épaisseur uniforme, la radioscopie présente un gradient de niveaux de gris dans la zone expertisable.

La figure 2 représente un schéma synoptique des principales étapes du procédé de détection de défauts dans une radioscopie de pièce mécanique complexe, selon l'invention.

Dans une première étape 10, la radioscopie de la pièce est segmentée en deux classes de zones, ces deux classes correspondant respectivement aux zones expertisables homogènes et aux zones non expertisables. Le résultat de la segmentation est exprimé sous la forme d'une image binaire, appelée masque M, dans laquelle les deux classes de zones sont représentées par des valeurs binaires respectivement égales à 0 et à 1.
Par exemple, la valeur 1 est attribuée aux points de l'image qui appartiennent à une zone expertisable, la valeur 0 est attribuée aux points de l'image correspondant aux zones non expertisables. La segmentation de l'image radioscopique est effectuée en plusieurs sous étapes successives. La première sous étape 11 consiste à effectuer un seuillage approximatif de l'image radioscopique de manière à sélectionner les points de l'image appartenant sans ambiguïté aux régions exemptes d'information utile et à affecter à ces points une valeur de niveau de gris prédéterminée.

La valeur de niveau de gris est choisie telle qu'elle ne puisse pas se confondre avec de l'information utile. Par exemple la valeur 255 qui correspond à du blanc saturé peut être choisie puisque cette valeur ne peut pas représenter de l'information utile. Dans le cas où l'image radioscopique présente un fort gradient de niveaux de gris dans la zone expertisable, la sous étape 11 peut être précédée d'une opération préliminaire pour remettre à plat le fond de la zone expertisable. L'opération préliminaire peut être par exemple une transformation dite "chapeau haut de forme" ou un filtre passe-bas.

Le seuillage ayant été effectué approximativement, les points de l'image appartenant aux régions exemptes d'information utile ne sont pas tous mis à la valeur 255 et il reste des zones résiduelles non expertisables de taille très réduite situées sur le pourtour des zones mises à la valeur 255.

Pour obtenir le masque M, dans une deuxième sous étape 12, ces zones résiduelles de dimension réduite sont bouchées en utilisant une opération de fermeture consistant à appliquer à l'image obtenue dans la sous étape 11 au moins un filtre alterné séquentiel. Dans le cas où l'image présente des défauts de taille inférieure ou égale à la taille des zones résiduelles non expertisables, l'application du filtre alterné séquentiel peut être suivie d'une opération de récupération des défauts consistant à comparer les images obtenues avant et après application du filtre alterné séquentiel et à attribuer, à chaque point de l'image, la valeur de niveau de gris maximale associée à ce point dans l'une ou l'autre de ces images. Lorsque les zones résiduelles non expertisables sont fermées, l'image obtenue est une image biphasée dont les valeurs de niveaux de gris représentent les zones expertisables et les zones non expertisables de l'image radioscopique. Dans cette image biphasée, les zones non expertisables ont un niveau de gris égal à une valeur prédéterminée, par exemple 255. Cette image est seuillée dans une troisième sous étape 13, de manière à obtenir une image binaire dans laquelle les zones expertisables et les zones non expertisables prennent respectivement les valeurs binaires 1 et 0. Cette image binaire constitue un masque à partir duquel est défini un élément structurant conditionnel et des transformations morphologiques conditionnelles. Ce masque est ensuite mis sous la forme d'une image numérique en niveaux gris au moyen d'une multiplication par la valeur 255 correspondant à la valeur maximale d'une image en niveaux de gris.

Dans une deuxième étape 20 des transformations morphologiques conditionnelles sont élaborées et appliquées à l'image biphasée obtenue dans la sous étape 12 de segmentation de manière à mettre en évidence des défauts éventuels. Les transformations morphologiques conditionnelles sont élaborées en remplaçant dans les expressions des transformations morphologiques classiques, l'élément structurant classique par un élément structurant conditionnel. Cet élément structurant conditionnel est obtenu en réalisant l'intersection entre un élément structurant classique et le masque M et permet de prendre en compte des configurations de voisinage dans lesquelles le nombre de voisins n'est pas constant. L'élément structurant conditionnel a la même taille que l'élément structurant classique, mais permet de ne tenir compte que des points appartenant aux zones expertisables de l'image.
Dans le cas où les transformations morphologiques conditionnelles sont appliquées sur des images binaires, ces images sont considérées comme des ensembles et les transformations font intervenir des opérations d'intersection et d'union dans lesquelles le masque M est mis sous une forme binaire. Par exemple la dilatation morphologique conditionnelle d'une image binaire X est l'ensemble des origines y de tous les éléments structurants conditionnels translatés dans l'image X dont l'intersection avec l'image X n'est pas vide. L'élément structurant conditionnel étant obtenu par une intersection avec le masque M, le résultat de la dilatation conditionnelle ne dépend pas des points de l'image situés dans les zones non expertisables.
En considérant les propriétés des intersections entre des ensembles, la dilatation morphologique conditionnelle d'une image binaire X peut aussi être obtenue en réalisant une intersection entre l'image binaire X et le masque M puis en appliquant une dilatation morphologique classique au résultat de cette intersection.
De même, l'érosion morphologique conditionnelle d'une image binaire X est l'ensemble des origines y de tous les éléments structurants conditionnels translatés qui sont complètement inclus dans l'image X.
En considérant les propriétés des intersections et des unions entre des ensembles, l'érosion morphologique conditionnelle d'une image binaire X peut aussi être obtenue en réalisant l'union entre l'image binaire X et le complémentaire du masque M puis en appliquant une érosion morphologique classique au résultat de cette union.

De la même façon, une ouverture morphologique conditionnelle, ou une fermeture morphologique conditionnelle, est élaborée en utilisant un élément structurant conditionnel. En considérant les propriétés des intersections et des unions entre des ensembles, l'ouverture morphologique conditionnelle peut aussi être obtenue en réalisant l'union entre l'image binaire X et le complémentaire du masque M, puis en appliquant une ouverture morphologique classique au résultat de cette union, suivie d'une intersection du résultat de l'ouverture avec le masque M. De façon analogue, la fermeture morphologique conditionnelle peut être obtenue en réalisant l'intersection entre l'image binaire X et le masque M, puis en appliquant une fermeture morphologique classique au résultat de cette intersection, suivie d'une union du résultat de la fermeture avec le complémentaire du masque M.
Des transformations plus complexes, comme les filtres alternés séquentiels ou le gradient sont obtenues de façon similaire en utilisant des combinaisons des transformations explicitées ci-dessus.

Comme pour les transformations morphologiques classiques, les transformations conditionnelles peuvent être généralisées à des images numériques en niveaux de gris. Dans ce cas le masque M est une image dans laquelle les points qui appartiennent à une zone non expertisable prennent la valeur maximale en niveau de gris, les autres points de l'image prenant la valeur zéro. Les opérations d'intersection et d'union sont respectivement remplacées par les fonctions minimum et maximum entre deux images numériques.

L'invention n'est pas limitée à l'exemple de réalisation précisément décrit, en particulier elle s'applique également au cas où les zones exemptes d'information utile se présentent comme des zones très claires en utilisant le principe de dualité selon lequel les opérations de fermeture morphologique sont remplacées par des opérations d'ouverture morphologique et réciproquement ; de même les opérations d'érosion morphologique sont remplacées par des opérations de dilatation morphologique. Par ailleurs, lorsque les zones exemptes d'information utile sont des zones très claires, la récupération des défauts après application d'un filtre alterné séquentiel à l'image radioscopique est effectuée en attribuant à chaque point de l'image la valeur minimale de niveau gris qui lui est associée dans l'image avant filtrage ou après filtrage.

## Revendications

1. Procédé de détection automatique de défauts dans des pièces mécaniques à géométrie complexe à partir d'images radioscopiques présentant des zones exemptes d'information utile, appelées zones non expertisables, à l'intérieur de zones dites expertisables, **caractérisé en ce qu'**il consiste :
- à réaliser au moins une image radioscopique de la pièce à contrôler,
- à segmenter (10) l'image radioscopique en deux classes de zones correspondant respectivement aux zones expertisables et non expertisables, de manière à obtenir une image binaire appelée masque,
- à choisir un élément structurant standard de taille et de forme prédéterminées,
- à définir un élément structurant conditionnel égal à l'intersection de l'élément structurant standard avec le masque,
- à définir des transformations morphologiques conditionnelles utilisant l'élément structurant conditionnel,
- à appliquer lesdites transformations morphologiques conditionnelles à l'image radioscopique de façon à mettre en évidence des éventuels défauts dans les zones expertisables de l'image.

2. Procédé de détection automatique de défauts selon la revendication 1, **caractérisé en ce que** la segmentation (10) de l'image radioscopique comporte une première étape (11) consistant à effectuer un seuillage approximatif de l'image radioscopique de manière à sélectionner les points de l'image appartenant sans ambiguïté à des zones non expertisables, et à attribuer à ces points une valeur de niveau de gris prédéterminée ; une deuxième étape (12) consistant à fermer les zones résiduelles non expertisables situées au voisinage des points sélectionnés de manière à obtenir une image radioscopique biphasée; une troisième étape (13) consistant à seuiller l'image biphasée obtenue dans la deuxième étape (12) pour obtenir une image binaire constituant le masque.

3. Procédé de détection automatique de défauts selon la revendication 2, **caractérisé en ce que** la fermeture des zones résiduelles non expertisables dans une image consiste à appliquer à l'image, au moins un filtre alterné séquentiel, à comparer les images obtenues avant et après application du filtre alterné séquentiel, à attibuer à chaque point de l'image, la valeur de niveau de gris maximale associée à ce point dans l'une des images obtenues avant et après application du filtre alterné séquentiel.

4. Procédé de détection automatique de défauts selon l'une quelconque des revendications 2 ou 3, **caractérisé en ce que** les transformations morphologiques conditionnelles sont appliquées à l'image radioscopique biphasée obtenue dans l'étape (12) pour mettre en évidence des éventuels défauts dans les zones expertisables de l'image radioscopique de la pièce à contrôler.

## Patentansprüche

1. Verfahren zur automatischen Erfassung von Fehlstellen in mechanischen Werkstücken mit komplizierter Geometrie auf Grundlage von Röntgenbildern, die innerhalb von sogenannten überprüfbaren Bereichen Bereiche ohne verwendbare Information aufweisen, welche nicht überprüfbare Bereiche genannt werden,
**dadurch gekennzeichnet,**
**dass** es darin besteht:
- mindestens ein Röntgenbild von dem zu überprüfenden Werkstück herzustellen,
- das Röntgenbild in zwei Bereichsklassen zu segmentieren (10), die dem überprüfbaren Bereich bzw. dem nicht überprüfbaren Bereich entsprechen, so dass ein binäres Bild entsteht, das Maske genannt wird,
- ein standardisiertes strukturierendes Element mit vorbestimmter Größe und Form zu wählen,
- ein konditionelles strukturierendes Element zu definieren, das gleich der Schnittmenge des standardisierten strukturierenden Elements mit der Maske ist,
- konditionelle morphologische Transformationen unter Verwendung des konditionellen strukturierenden Elements zu bestimmen,
- diese konditionellen morphologischen Transformationen an dem Röntgenbild vorzunehmen, so dass eventuelle Fehlstellen in den überprüfbaren Bereichen des Bildes sichtbar werden.

2. Verfahren zur automatischen Erfassung von Fehlstellen nach Anspruch 1,
**dadurch gekennzeichnet,**
**dass** die Segmentierung (10) des Röntgenbildes einen ersten Schritt (11) beinhaltet, der darin besteht, einen Annäherungs-Schwcllenwert für das Röntgenbild einzurichten, so dass die Bildpunkte, die eindeutig zu den Bereichen ohne verwendbare Information gehören, ausgewählt werden und diesen Punkten ein vorbestimmter Graupegel-Wert zugeordnet wird; einen zweiten Schritt (12) beinhaltet, der darin besteht, die nicht überprüfbaren Restbereiche, die sich in unmittelbarer Umgebung der ausgewählten Punkte befinden, zu schließen, so dass ein zweiphasiges Bild entsteht; einen dritten Schritt (13) beinhaltet, der darin besteht, an das mit dem zweiten Schritt (12) erzielte zweiphasige Bild einen Schwellenwert anzulegen, so dass ein binäres Bild entsteht, das die Maske bildet.

3. Verfahren zur automatischen Erfassung von Fehlstellen nach Anspruch 2,
**dadurch gekennzeichnet,**
**dass** das Schließen der nicht überprüfbaren Restbereiche in einem Bild darin besteht, dass auf das Bild mindestens ein sequentieller Wechselfilter angelegt wird, dass die vor und nach der Anwendung des sequentiellen Wechselfilters erzielten Bilder miteinander verglichen werden, dass jedem Bildpunkt der maximale Graupegel-Wert zugeordnet wird, der diesem Punkt in einem der vor und nach der Anwendung des sequentiellen Wechselfilters erzielten Bilder zugeordnet ist.

4. Verfahren zur automatischen Erfassung von Fehlstellen nach einem der Ansprüche 2 oder 3,
**dadurch gekennzeichnet,**
**dass** die konditionellen morphologischen Transformationen an dem mit dem zweiten Schritt (12) erzielten zweiphasigen Röntgenbild vorgenommen werden, um eventuelle Fehlstellen in den überprüfbaren Bereichen des Röntgenbildes des zu überprüfenden Werkstücks sichtbar zu machen.

## Claims

1. Method for automatically detecting defects in mechanical parts with a complex geometry on the basis of radioscopic images having zones without any useful information, referred to as non-evaluable zones, inside so-called evaluable zones, **characterized in that** it consists:
- in taking at least one radioscopic image of the part to be inspected,
- in segmenting (10) the radioscopic image into two classes of zones, respectively corresponding to the non-evaluable and evaluable zones, so as to obtain a binary image referred to as a mask,
- in selecting a standard structuring element of predetermined size and shape,
- in defining a conditional structuring element equal to the intersection of the standard structuring element with the mask,
- in defining conditional morphological transformations using the conditional structuring element,
- in applying the said conditional morphological transformations to the radioscopic image so as to highlight possible defects in the evaluable zones of the image.

2. Method for automatically detecting defects according to Claim 1, **characterized in that** the segmentation (10) of the radioscopic image comprises a first step (11) consisting in carrying out approximate thresholding of the radioscopic image so as.to select the points of the image belonging unequivocally to non-evaluable zones, and in assigning a predetermined grey-scale value to these points; a second step (12) consisting in closing the non-evaluable residual zones located in the vicinity of the selected points, so as to obtain a biphasic radioscopic image; a third step (13) consisting in thresholding the biphasic image obtained in the second step (12) in order to obtain a binary image constituting the mask.

3. Method for automatically detecting defects according to Claim 2, **characterized in that** the closure of the non-evaluable residual zones in an image consists in applying at least one alternate sequential filter to the image, in comparing the images obtained before and after application of the alternate sequential filter, in assigning to each point of the image the maximum grey-scale value associated with this point in one of the images obtained before and after application of the alternate sequential filter.

4. Method for automatically detecting defects according to either one of Claims 2 and 3, **characterized in that** the conditional morphological transformations are applied to the biphasic radioscopic image obtained in step (12) in order to highlight possible defects in the evaluable zones of the radioscopic image of the part to be inspected.
